# EUROPEAN PATENT SPECIFICATION

(11) **EP 2 545 825 B1**
(45) Date of publication and mention of the grant of the patent: **26.03.2014**
(21) Application number: 12176624.0
(22) Date of filing: 16.07.2012
(51) Int. Cl.: A47J 31/44, G07F 13/06

(54) **Cup beverage vending machine with multiple beverage dispensing points and selected beverage dispensing point lighting**
Bechergetränkeautomat mit mehreren Getränkeausgabepunkten und ausgewählter Beleuchtung der Getränkeausgabepunkte
Machine distributrice de boissons en gobelet avec plusieurs points de distribution de boissons et un éclairage de point de distribution de boissons choisi

(30) Priority: 14.07.2011 IT TO20110621
(43) Date of publication of application: 16.01.2013
(73) Proprietor: N&W Global Vending S.p.A., Valbrembo (IT)
(72) Inventor: Scotti, Mauro, 24123 Bergamo (IT)
(74) Representative: Bergadano, Mirko

(56) References cited:
- DE-A1-102009 003 251
- DE-U1- 7 837 908

## Description

The present invention relates to a cup beverage vending machine with multiple beverage dispensing points and selected beverage dispensing point lighting.

Cup beverage vending machines with multiple beverage dispensing points are known, see for example DE 102009003251 A1, in which different beverage dispensing nozzles are located at different dispensing points over respective cup stands on a cup supporting surface in the beverage take-out compartment.

A fairly common occurrence, noted by the Applicant, in vending machines of this type is that, for various reasons, most commonly because the user is distracted in conversation, the cup is not deposited properly or at all on the cup supporting surface, i.e. it is deposited under the right beverage dispensing nozzle, but so off-centre that the beverage is dispensed outside the cup; or it is deposited under the wrong beverage dispensing nozzle; or no cup at all is deposited on the cup supporting surface.

It is an object of the present invention to provide a cup beverage vending machine with multiple beverage dispensing points, designed to eliminate the above drawback.

According to the present invention, there is provided a cup beverage vending machine as claimed in the accompanying Claims.

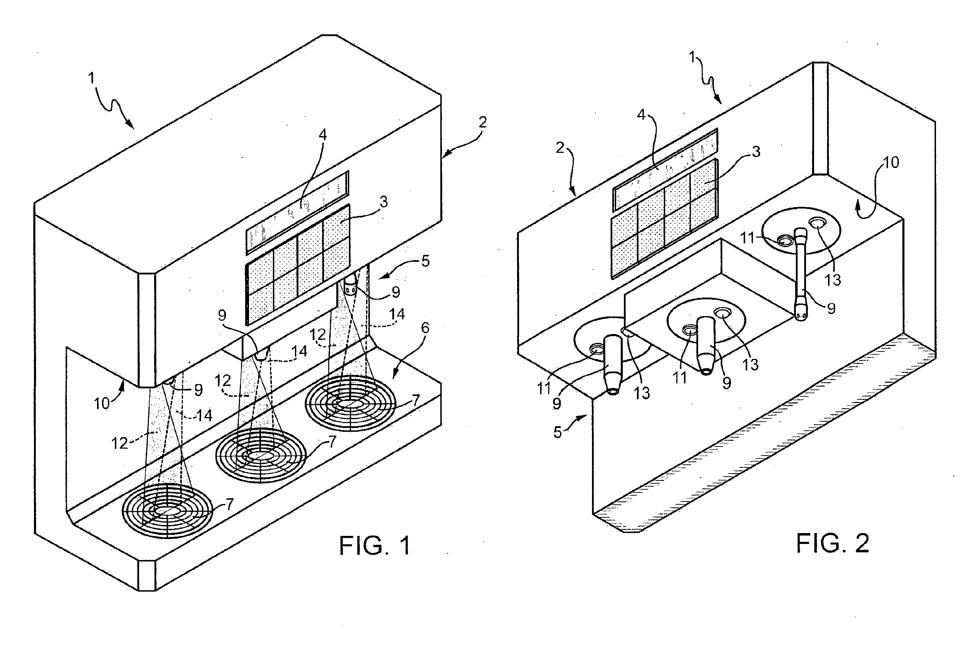

A non-limiting embodiment of the present invention will be described by way of example with reference to the accompanying drawings, in which :
:Figure 1 shows a view in perspective of a preferred embodiment of the cup beverage vending machine according to the present invention;
Figure 2 shows a detail of the Figure 1 cup beverage vending machine;
Figure 3 shows a block diagram of the Figure 1 and 2 cup beverage vending machine.

The following is a detailed description of the present invention, with reference to the accompanying drawings, to enable anyone skilled in the art to produce and operate it. As will be obvious to anyone skilled in the art, changes may be made to the embodiments described, and the general principles described may be applied to other embodiments and applications without, however, departing from the protective scope of the invention as defined in the accompanying Claims. As such, the present invention shall not be considered limited to the embodiments described and illustrated, but shall be accorded the widest protective scope, as defined in the accompanying Claims.

Number 1 in Figures 1 and 2 indicates as a whole a cup beverage vending machine with multiple beverage dispensing points.

Cup beverage vending machine 1 substantially comprises a casing 2 fitted with a beverage selection keypad 3 and display 4, and defining, beneath keypad 3, a beverage take-out compartment 5 accessible from the outside and defining a cup supporting surface 6 with a number of - in the Figure 1 and 2 example, three - individual cup stands 7.

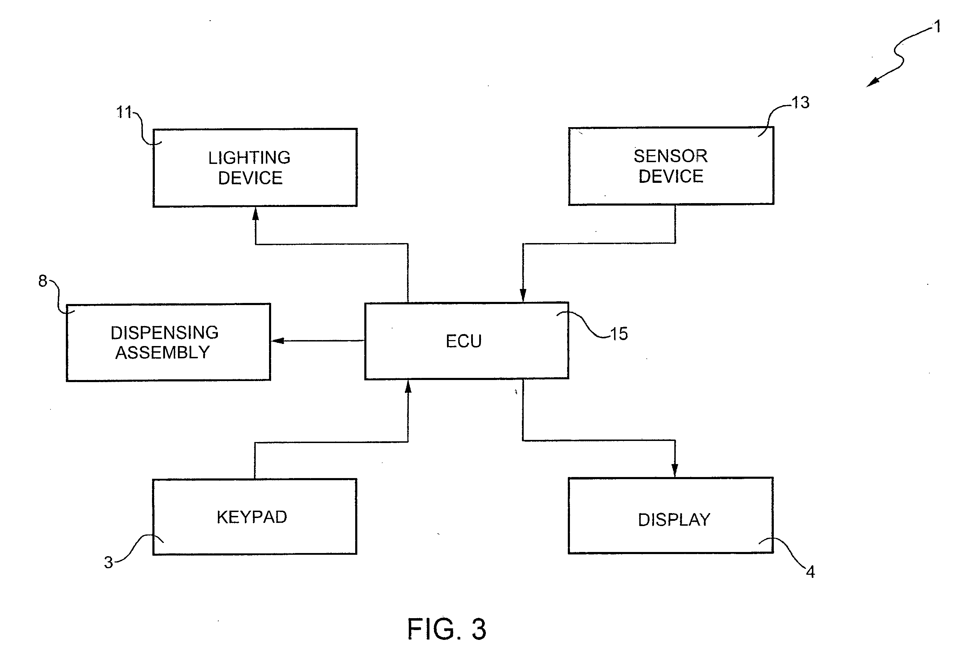

Cup beverage vending machine 1 also comprises a beverage-making and dispensing assembly 8 (shown schematically in Figure 3) housed inside casing 2 and having fluid dispensing nozzles 9, which project from casing 2, at a top wall 10 of beverage take-out compartment 5, and over respective cup stands 7.

In the Figure 1 and 2 example, fluid dispensing nozzles 9 comprise two nozzles for dispensing different beverages, e.g. coffee and a chocolate, tea or other instant beverage; and a steam nozzle or so-called steam wand, e.g. for making cappuccino. The latter is optional and may either be eliminated or replaced with another nozzle for dispensing a different beverage.

Cup beverage vending machine 1 also comprises a lighting device 11 for lighting cup stands 7, and which conveniently comprises light-emitting diodes fitted to top wall 10 of beverage take-out compartment 5, next to respective fluid dispensing nozzles 9 and over respective cup stands 7, and activatable to generate and direct respective white or coloured light beams 12 onto cup stands 7; and a sensor device 13 for detecting the presence of cups on stands 7, and conveniently comprising proximity sensors - conveniently at least one for each fluid dispensing nozzle 9 - fitted to top wall 10 of beverage take-out compartment 5, next to respective fluid dispensing nozzles 9 and over respective cup stands 7, and having respective view fields 14 shaped and oriented to cover small or large cups positioned correctly on respective stands 7.

With reference to Figure 3, in which the same reference numbers are used as for the corresponding parts in Figures 1 and 2, cup beverage vending machine 1 also comprises an electronic, conveniently microprocessor type, control unit 15 connected to beverage-making and dispensing assembly 8, keypad 3, display 4, lighting device 11, and sensor device 13, and programmed to control operation of cup beverage vending machine 1 by means of special control software memorized inside it.

According to one feature of the present invention, electronic control unit 15 is programmed to control lighting device 11 so that, in response to user selection of a beverage on keypad 3, it only illuminates one of cup stands 7, and more specifically the one beneath the nozzle 9 dispensing the selected beverage, and on which a cup for the selected beverage is to be deposited.

Preferably, but not necessarily, electronic control unit 15 is programmed so that lighting device 11 illuminates all the cup stands 7 when cup beverage vending machine 1 is in standby mode; in response to selection of a beverage, cuts off lighting to all but the cup stand 7 on which a cup for the selected beverage is to be deposited; and restores lighting to all the cup stands 7 once the selected beverage is dispensed.

Alternatively, electronic control unit 15 may be programmed so that lighting device 11 illuminates none of cup stands 7 when cup beverage vending machine 1 is in standby mode; and, in response to selection of a beverage, only illuminates the cup stand 7 on which a cup for the selected beverage is to be deposited.

Electronic control unit 15 is also programmed to provide the user, on the basis of the findings of sensor device 13, with a visual signal, possibly combined with an acoustic signal, indicating a missing or wrongly positioned cup on the illuminated cup stand 7.

More specifically, electronic control unit 15 is programmed so that the visual signal is either shown on display 4 in the form of a text message or icon, or preferably by lighting device 11 flashing the cup stand 7 on which the cup is to be deposited.

According to another feature of the present invention, electronic control unit 15 is programmed to control the beverage-making and dispensing assembly on the basis of the findings of sensor device 13, and to prevent the selected beverage from being dispensed in the event the cup is missing or positioned wrongly on the illuminated cup stand 7.

## Claims

1. A cup beverage vending machine (1) comprising:
- a beverage dispensing assembly (8) with fluid dispensing nozzles (9) located over respective cup stands (7);
- a beverage selection device (3);
- a lighting device (11) for lighting the cup stands (7); and
- an electronic control unit (15) connected to the beverage dispensing assembly (8), the beverage selection device (3) and the lighting device (11), and so configured that, in response to selection of a beverage, the lighting device (11) illuminates a cup stand (7) on which a cup for the dispensed beverage is to be deposited.

2. A cup beverage vending machine as claimed in Claim 1, wherein the electronic control unit (15) is also configured so that the lighting device (11) illuminates all the cup stands (7) and, in response to selection of a beverage, only illuminates the cup stand (7) on which a cup for the dispensed beverage is to be deposited.

3. A cup beverage vending machine as claimed in Claim 1 or 2, and also comprising a sensor device (13) for detecting the presence of cups on the cup stands (7).

4. A cup beverage vending machine as claimed in Claim 3, wherein the electronic control unit (15) is also configured to indicate a missing or wrongly positioned cup on the illuminated cup stand (7).

5. A cup beverage vending machine as claimed in Claim 4, wherein the electronic control unit (15) is also configured for the lighting device (11) to give a visual indication of a missing or wrongly positioned cup on the illuminated cup stand (7).

6. A cup beverage vending machine as claimed in Claim 5, wherein the electronic control unit (15) is also configured for the lighting device (11) to give a visual indication of a missing or wrongly positioned cup by flashing the cup stand (7)on which the cup is to be deposited.

7. A cup beverage vending machine as claimed in Claim 4, and also comprising :
- a display (4) connected to the electronic control unit (15);
and wherein the electronic control unit (15) is also configured for the display (4) to give a visual indication of a missing or wrongly positioned cup on the illuminated cup stand (7).

8. A cup beverage vending machine as claimed in one of Claims 3 to 7, wherein the electronic control unit (15) is also configured to prevent the beverage dispensing assembly (8) from dispensing a selected beverage in the event of a missing or wrongly positioned cup on the illuminated cup stand (7).

9. An electronic control unit (15) for a cup beverage vending machine (1) as claimed in any one of the foregoing Claims.

10. Software loadable onto an electronic control unit (15) of a cup beverage vending machine (1), and designed, when executed, to configure the electronic control unit (15) as claimed in any one of Claims 1 to 7.

## Patentansprüche

1. Bechergetränkeautomat (1), umfassend:
- eine Getränkeausgabe-Baugruppe (8) mit Fluidausgabedüsen (9), die sich über jeweiligen Becherabstellflächen (7) befinden;
- eine Getränkeauswahlvorrichtung (3);
- eine Beleuchtungsvorrichtung (11) zum Beleuchten der Becherabstellflächen (7); und
- eine elektronische Steuereinheit (15), die mit der Getränkeausgabe-Baugruppe (8), der Getränkeauswahlvorrichtung (3) und der Beleuchtungsvorrichtung (11) verbunden und so ausgestaltet ist, dass, in Reaktion auf die Auswahl eines Getränks, die Beleuchtungsvorrichtung (11) die Becherabstellfläche (7) beleuchtet, auf der ein Becher für das ausgegebene Getränk platziert werden soll.

2. Bechergetränkeautomat nach Anspruch 1, wobei die elektronische Steuereinheit (15) auch so ausgestaltet ist, dass die Beleuchtungsvorrichtung (11) alle Becherabstellflächen (7) beleuchtet und, in Reaktion auf die Auswahl eines Getränks, nur die Becherabstellfläche (7) beleuchtet, auf der ein Becher für das ausgegebene Getränk platziert werden soll.

3. Bechergetränkeautomat nach Anspruch 1 oder 2, und ebenfalls umfassend eine Sensorvorrichtung (13) zum Erfassen der Gegenwart von Bechern auf den Becherabstellflächen (7).

4. Bechergetränkeautomat nach Anspruch 3, wobei die elektronische Steuereinheit (15) ebenfalls ausgestaltet ist, einen fehlenden oder falsch platzierten Becher auf der beleuchteten Becherabstellfläche (7) anzuzeigen.

5. Bechergetränkeautomat nach Anspruch 4, wobei die elektronische Steuereinheit (15) ebenfalls so ausgestaltet ist, dass die Beleuchtungsvorrichtung (11) eine visuelle Anzeige zu einem fehlenden oder falsch platzierten Becher auf der beleuchteten Becherabstellfläche (7) macht.

6. Bechergetränkeautomat nach Anspruch 5, wobei die elektronische Steuereinheit (15) ebenfalls so ausgestaltet ist, dass die Beleuchtungsvorrichtung (11) einen visuellen Hinweis zu einem fehlenden oder falsch platzierten Becher durch Blinken bei der Becherabstellfläche (7) gibt, auf der der Becher platziert werden soll.

7. Bechergetränkeautomat nach Anspruch 4, ebenfalls umfassend:
- eine Anzeige (4), die mit der elektronischen Steuereinheit (15) verbunden ist;
und wobei die elektronische Steuereinheit (15) ebenfalls so ausgestaltet ist, dass die Anzeige (4) einen visuellen Hinweis zu einem fehlenden oder falsch platzierten Becher auf der beleuchteten Becherabstellfläche (7) gibt.

8. Bechergetränkeautomat nach einem der Ansprüche 3 bis 7, wobei die elektronische Steuereinheit (15) ebenfalls ausgestaltet ist, zu verhindern, dass die Getränkeausgabeeinheit (8) ein ausgewähltes Getränk im Fall eines fehlenden oder falsch positionierten Bechers auf der beleuchteten Becherabstellfläche (7) ausgibt.

9. Elektronische Steuereinheit (15) für einen Bechergetränkeautomaten (1) nach einem der vorhergehenden Ansprüche.

10. Software, die auf eine elektronische Steuereinheit (15) eines Bechergetränkeautomaten (1) ladbar ist und so gestaltet ist, dass sie, wenn sie ausgeführt wird, die elektronische Steuereinheit (15) nach den Ansprüchen 1 bis 7 konfiguriert.

## Revendications

1. Machine de distribution de boissons en gobelet (1) comprenant :
un ensemble de distribution de boisson (8) avec des buses de distribution de fluide (9) positionnées sur des supports de gobelet (7) respectifs ;
un système de sélection de boisson (3) ;
un dispositif d'éclairage (11) pour éclairer les supports de gobelet (7) ; et
une unité de commande électronique (15) raccordée à l'ensemble de distribution de boisson (8), au dispositif de sélection de boisson (3) et au dispositif d'éclairage (11) et configurée de sorte que, en réponse à la sélection d'une boisson, le dispositif d'éclairage (11) éclaire un support de gobelet (7) sur lequel un gobelet doit être déposé pour la boisson distribuée.

2. Machine de distribution de boissons en gobelet selon la revendication 1, dans laquelle l'unité de commande électronique (15) est également configurée de sorte que le dispositif d'éclairage (11) éclaire tous les supports de gobelet (7) et, en réponse à la sélection d'une boisson, n'éclaire qu'un support de gobelet (7) sur lequel un gobelet doit être déposé pour la boisson distribuée.

3. Machine de distribution de boissons en gobelet selon la revendication 1 ou 2, et comprenant en outre un dispositif de capteur (13) pour détecter la présence de gobelets sur les supports de gobelet (7).

4. Machine de distribution de boissons en gobelet selon la revendication 3, dans laquelle l'unité de commande électronique (15) est également configurée pour indiquer un gobelet manquant ou mal positionné sur le support de gobelet (7) éclairé.

5. Machine de distribution de boissons en gobelet selon la revendication 4, dans laquelle l'unité de commande électronique (15) est également configurée pour que le dispositif d'éclairage (11) donne une indication visuelle du gobelet manquant ou mal positionné sur le support de gobelet (7) éclairé.

6. Machine de distribution de boissons en gobelet selon la revendication 5, dans laquelle l'unité de commande électronique (15) est également configurée pour que le dispositif d'éclairage (11) donne une indication visuelle d'un gobelet manquant ou mal positionné en éclairant de manière clignotante le support de gobelet (7) sur lequel le gobelet doit être déposé.

7. Machine de distribution de boissons en gobelet selon la revendication 4, et comprenant en outre :
un écran (4) raccordé à l'unité de commande électronique (15) ;
et dans laquelle l'unité de commande électronique (15) est également configurée pour que l'écran (4) donne une indication visuelle d'un gobelet manquant ou mal positionné sur le support de gobelet (7) éclairé.

8. Machine de distribution de boissons en gobelet selon l'une quelconque des revendications 3 à 7, dans laquelle l'unité de commande électronique (15) est également configurée pour empêcher l'ensemble de distribution de boisson (8) de distribuer une boisson sélectionnée en cas de gobelet manquant ou mal positionné sur le support de gobelet (7) éclairé.

9. Unité de commande électronique (15) pour une machine de distribution de boissons en gobelet (1) selon l'une quelconque des revendications précédentes.

10. Logiciel pouvant être chargé sur une unité de commande électronique (15) d'une machine de distribution de boissons en gobelet (1), et conçu, lorsqu'il est exécuté, pour configurer l'unité de commande électronique (15) selon l'une quelconque des revendications 1 à 7.
